(19)

Europäisches
Patentamt
European
Patent Office
Office européen
des brevets

(11) **EP 2 450 831 A2**

(12) **EUROPEAN PATENT APPLICATION**

(43) Date of publication:
**09.05.2012 Bulletin 2012/19**

(51) Int Cl.:
***G06K 9/00*** *(2006.01)*

(21) Application number: **11187439.2**

(22) Date of filing: **02.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.11.2010 CN 201010532710**

(71) Applicant: **Ricoh Company, Ltd.**
**Tokyo 143-8555 (JP)**

(72) Inventors:
• **Zhong, Cheng**
**100044 Beijing (CN)**

• **Yuan, Xun**
**100044 Beijing (CN)**
• **Liu, Tong**
**100044 Beijing (CN)**
• **Shi, Zhongchao**
**100044 Beijing (CN)**
• **Wang, Gang**
**100044 Beijing (CN)**

(74) Representative: **Schwabe - Sandmair - Marx**
**Patentanwälte**
**Stuntzstraße 16**
**81677 München (DE)**

(54) **Method and system for detecting multi-view human face**

(57) Disclosed are a system and a method for detecting a multi-view human face. The system comprises an input device configured to input image data; a hybrid classifier including a non-human-face rejection classifier configured to roughly detect non-human-face image data and plural angle tag classifiers configured to add an angle tag into the image data having a human face; and plural cascade angle classifiers. Each of the plural cascade angle classifiers corresponds to a human face angle. One of the plural cascade angle classifiers receives the image data with the angle tag output from the corresponding angle tag classifier, and further detects whether the received image data with the angle tag includes the human face.

FIG.6

EP 2 450 831 A2

**Description**

BACKGROUND OF THE INVENTION

1. Field of the Invention

The present invention relates to a method and a system for detecting a multi-view human face, and more particularly relates to a method and a system able to improve human face detection speed by rapidly determining angles of the human face.

2. Description of the Related Art

A rapid and accurate object detection algorithm is the basis of many applications such as human face detection and emotional analysis, video conference control and analysis, a passerby protection system, etc. As a result, after the AdaBoost human face detection algorithm (frontal view recognition) achieves dramatic success, many scholars focus their studies into this field. However, with the rapid development of digital cameras and cell phones, a technique that may only carry out frontal view human face recognition cannot satisfy everyday demands of human beings.

Up to now, many algorithms have been used to try to solve some challengeable problems, for example, a human face detection problem under a multi-view circumstance. This shows that it is very necessary to develop a rapid and accurate human face detection technique under a multi-view circumstance.

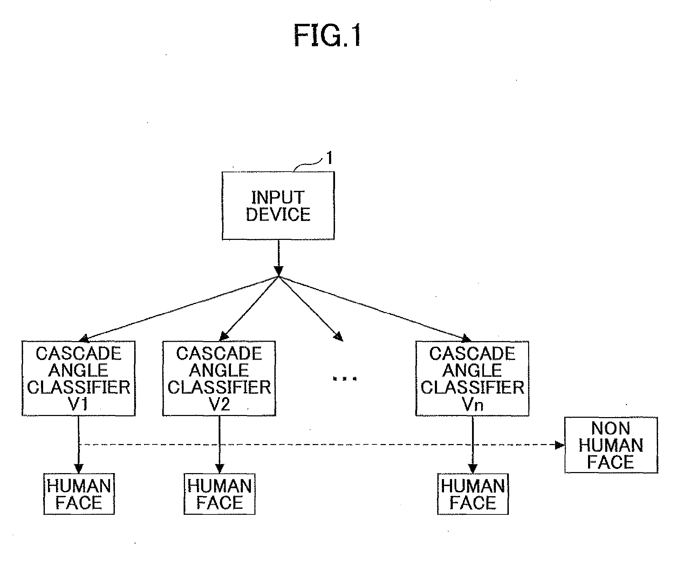

In the below cited reference No. 1, an algorithm and an apparatus used to carry out robust human face detection are disclosed. In this patent application, micro-structure features having high performance and high redundancy are adopted to express human facial features. The AdoBoost algorithm is utilized to choose the most representative partial features to form a strong classifier so that a position of the human face may be found from complicated background information. FIG. 1 illustrates a multi-view human face detection system from the cited reference No. 1. However, the biggest drawback of the cited reference No.1 is that for each of the predetermined angles, it is necessary to obtain a corresponding human face detector by carrying out training, and in the detection process, it is necessary to adopt all the detectors to cover the respective angles. As a result, this detection process costs a very long detection time.

In the below cited reference No. 2, an algorithm and an apparatus used to carry out multi-view human face detection are disclosed. In this reference, a human face detection system uses a sequence of strong classifiers of gradually increasing complexity to discard non-human-face data at earlier stages (i.e. stages having relatively lower complexity) in a multi-stage classifier structure. The multi-stage classifier structure has a pyramid-like architecture, and adopts a from-coarse-to-fine and from-simple-to-complex scheme. As a result, by using relatively simple features (i.e. features adopted at the earlier stages in the multi-stage classifier structure), it is possible to discard a large amount of non-human-face data. In this way, a real-time multi-view human face detection system is achieved. However, the biggest problem of the algorithm is that in the detection process, the pyramid-like architecture includes a large amount of redundant information at the same time. As a result, the detection speed and the detection accuracy are negatively influenced.

In the below cited reference No. 3, a method and an apparatus able to carry out specific object detection are disclosed. In this reference, HAAR features are used as weak features. The Real-AdaBoost algorithm is employed to obtain, by carrying out training, a strong classifier at each stage in a multi-stage classifier structure so as to further improve detection accuracy, and a LUT (i.e. look-up table) data structure is proposed to improve speed of feature selection. Here it should be noted that "strong classifier" and "weak feature" are well-known concepts in the art. However, one major drawback of this patent is that the method may only be applied to specific object detection within a certain range of angles, i.e., frontal view human face recognition is mainly carried out; as a result, its application is limited in some measure.

Therefore, in the conventional multi-view human face detection methods, in order to improve speed of human face detection, it is necessary to solve a problem of how to detect angles of a human face so as to reduce the number of human face detectors used in an actual detection process.

> *Cited Reference No. 1:* US Patent Application Publication NO. 2007/0223812 B2
> Cited *Reference No. 2:* US Patent No. 7,324,671 B2
> Cited *Reference No. 3:* US Patent No. 7,457,432 B2

SUMMARY OF THE INVENTION

The embodiments of the present invention are proposed for overcoming the disadvantages of the prior art. The present embodiments provides a hybrid classifier for the human face detection systems so as to achieve two functions of roughly rejecting non-human-face image data, and adding an angle tag into image data so that the number of human face detectors (here it should be noted that sometimes a human face detector is called as a cascade angel classifier or a multi-stage angle classifier in this specification) needing to be utilized in an actual operational process by a detection system may be reduced.

According to one aspect of the present invention, a multi-view human face detection system is provided. The multi-view human face detection system comprises an input device configured to input image data; a hybrid classifier including a non-human-face rejection classifier configured to roughly detect non-human-face image data and plural angle tag classifiers configured to add an angle tag into the image data having a human face; and plural cascade angle classifiers. Each of the plural cascade angle classifiers corresponds to a human face angle. One of the plural cascade angle classifiers receives the image data with the angle tag output from the corresponding angle tag classifier, and further detects whether the received image data with the angle tag includes the human face.

Furthermore the input device further includes an image window scan unit configured to carry out data scan with regard to sub-windows having different sizes and different positions, of an original image, and then output image data of the scanned sub-windows into the hybrid classifier. Furthermore the non-human-face rejection classifier includes plural sub-classifiers, and each of the plural sub-classifiers is formed of plural weak classifiers.

Furthermore each of the plural angle tag classifiers calculates response values with regard to weak features extracted from the image data and the sum of the response values. An angle tag corresponding to an angle tag classifier corresponding to the largest sum is added into the input image data.

Furthermore the weak features include various local texture descriptions able to satisfy demands of real-time performance.

According to another aspect of the present invention, a multi-view human face detection method is provided. The multi-view human face detection method comprises an input step of inputting image data; a rough detection step of roughly detecting non-human-face image data, and adding an angle tag into the image data including a human face; and an accurate detection step of receiving the image data with the angle tag, and further detecting whether the received image data with the angle tag includes the human face.

The multi-view human face detection method further comprises a scan step of carrying out data scan with regard to sub-windows having different sizes and different positions, of an original image.

Furthermore weak features used in the rough detection step are obtained while carrying out the data scan.

Furthermore the weak features include various local texture descriptions able to satisfy demands of real-time performance.

Furthermore a classifier having stage structure is used to roughly detecting the non-human-face image data.

According to the above aspects of the present invention, when the image data is input, the image data is sent to a human face detector corresponding to the angle tag of the image data for carrying out accurate human face detection. By this way, regarding the problem of multiple views of a human face, it is possible to add an angle tag into image data; as for the problem of detection speed, it is possible to only adopt a human face detector corresponding to the angle tag. As a result, it is possible to dramatically save the detection time.

BRIEF DESCRIPTION OF THE DRAWINGS

FIG. 1 illustrates a conventional multi-view human face detection system;
FIG. 2 illustrates concrete structures of cascade angle classifiers;
FIG. 3 illustrates human face images corresponding to five angles with regard to a frontal view human face image;
FIG. 4 illustrates a multi-view human face detection system according to an embodiment of the present invention;
FIG. 5 illustrates how to obtain scan windows from a whole image;
FIG. 6 illustrates a concrete structure of a hybrid classifier;
FIG. 7 illustrates concrete structures of angle tag classifiers;
FIG. 8 is a flowchart of processing carried out by the hybrid classifier 42 shown in FIGS. 6 and 7;
FIG. 9 illustrates a weak feature adopted an angle classifier; and
FIG. 10 illustrates a weak classifier adopted in an angle classifier.

DETAILED DESCRIPTION OF THE PREFERRED EMBODIMENTS

Hereinafter, various embodiments of the present invention will be concretely described with reference to the drawings.

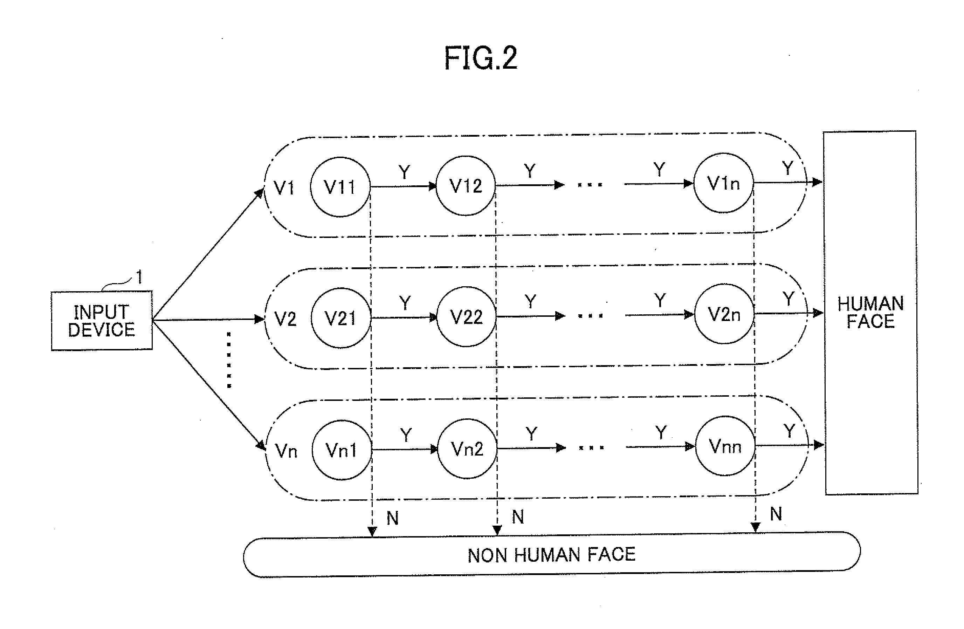

FIG. 1 illustrates a conventional multi-view human face detection system. FIG. 2 illustrates concrete structures of cascade angle classifiers shown in FIG. 1.

In FIG. 1, an input device 1 is used for inputting image data, and cascade angle classifiers (i.e. human face detectors) V1, V2, ···, and Vn correspond to different detection angles. In general, as shown in FIG. 2, the cascade angle classifier V1 is formed of stage classifiers V11, V12, ···, and V1n; the cascade angle classifier V2 is formed of stage classifiers V21, V22, ···, and V2n; and the cascade angle classifier Vn is formed of stage classifiers Vn1, Vn2, ···, and Vnn, where n is a counting number. In particular, for example, the second number from the left in a stage classifier symbol, for example, the second number 2 from the left in the stage classifier symbol V21, refers to the detection angle of this stage classifier. The third number from the left in a stage classifier symbol, for example, the third number 1 from the left in the stage classifier symbol V21, refers to the position of the stage classifier in the corresponding cascade angle classifier. That is, stage classifiers, whose symbols have the same third number from the left, in the cascade angle classifiers may be considered as being at the same stage; stage classifiers corresponding to different positions in the same cascade angle classifier adopt different features; and stage classifiers at the same stage of different cascade angle classifiers do not need to always adopt different features.

Here it should be noted that, in FIG. 2, although each of the cascade angle classifiers has n stage classifiers, those people skilled in the art may understand that since features corresponding to different detection angles may be different, the numbers of the stage classifiers in the respective cascade angle classifiers may be different too. That is, the stage classifiers do not need to always form a matrix as shown in FIG. 2, or in other words, this kind of matrix is not always fully-filled with the stage classifiers.

In addition, each of the stage classifiers may be any kind of strong classifier; for example, it is possible to adopt known strong classifiers used in the algorithms of the Support Vector Machine (SVM), AdaBoost, etc. As for the respective strong classifiers, it is possible to use various weak features expressing local texture structures or a combination of them to carry out calculation; the weak features may be those usually adopted in the art, for example, HAAR features and multi-scale local binary pattern (MSLBP) features.

Furthermore it should be noted that, in FIG. 2, although three cascade angle classifiers corresponding to three detection angles are illustrated, it is apparent to those people skilled in the art that the number of the cascade angle classifiers may be increased or decreased. For example, two cascade angle classifiers may be set up for two detection angles; four cascade angle classifiers may be set up for four detection angles; more cascade angle classifiers may be set up for more detection angles; or eventually only one cascade angle classifier may be set up for single-view detection as a special form of the multi-view human face detection system. In general, a human face detector is obtained based on training of features related to a specific angle of the human face; here, the so-called "angle" usually refers to a rotation angle of the human face with regard to a frontal view human face image.

In an embodiment of the present invention, five angles of a human face are described by referring to examples. Here it should be noted that those people skilled in the art may select a different number of angles according to actual needs, and in this case, the operational process is the same with that regarding the five angles.

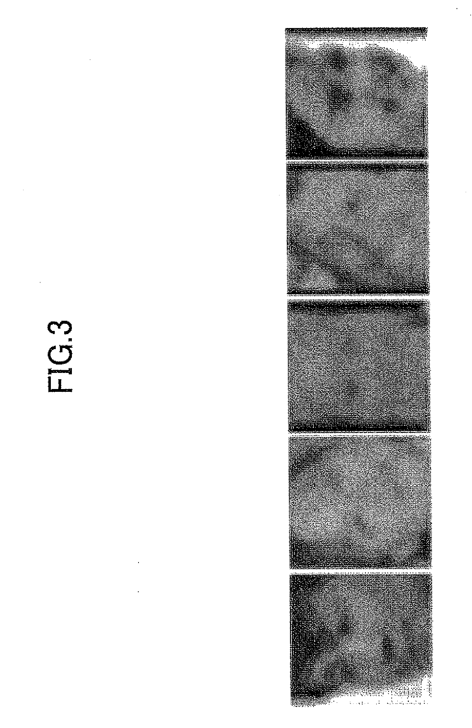

FIG. 3 illustrates human face images corresponding to five angles with regard to a frontal view human face image.

As shown in FIG. 3, the five angles from the left to the right are -45 degrees (ROP (rotation off plane)), -45 degrees (RIP (rotation in plane)), 0 degrees (frontal view), +45 degrees (RIP), and +45 degrees (ROP). Here it should be noted that the so-called "frontal view human face image" is a well-known concept in the art, and a human face image having a very small rotation angle with regard to the frontal view human face image is considered as a frontal view human face image in practice too. Similarly, in this specification, when mentioning that a human face rotates 45 degrees, that does not mean that the rotation angle must be 45 degrees; instead, that means that the rotation angle is within a predetermined range. For example, any angle within a range of 40 ~ 50 degrees may be considered as 45 degrees. In other words, the 45 degrees mentioned herein only refers to a range of rotation angle of a human face; any angle within the range of 40 ~ 50 degrees may be considered as rotating 45 degrees. By using samples of the five angles to carry out offline training so as to obtain stage classifiers and human face detectors, for example, as shown in FIG. 3, it is possible to create a multi-view human face detection system covering the five angles.

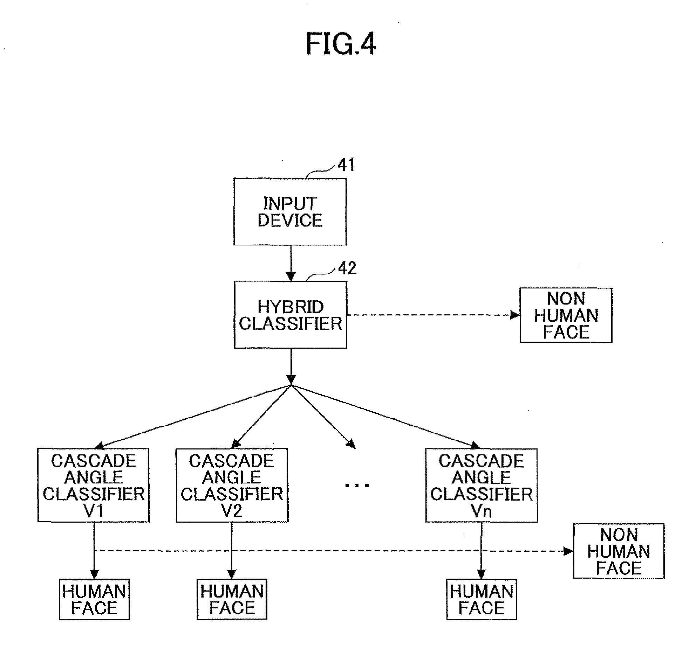

FIG. 4 illustrates a multi-view human face detection system according to an embodiment of the present invention.

As shown in FIG. 4, the multi-view human face detection system includes an image input device 41, a hybrid classifier 42, and cascade angle classifiers V1, V2, ···, and Vn. The hybrid classifier 42 receives an image output from the image input device 41, and then carries out classification processing with regard to the image. In particular, multi-scale local binary patterns are adopted to scan the image; then rough human face determination is carried out with regard to the scan window; then an angle of a human face is determined if the scan window has been determined as a scan window including the human dace; then the angle of the human face is added to the scan window (i.e. the human face scan window) as an angle tag; and then the human face scan window with the angle tag is input into a cascade angle classifier Vi corresponding to the angle tag. Here i is an integer number between 1 to n.

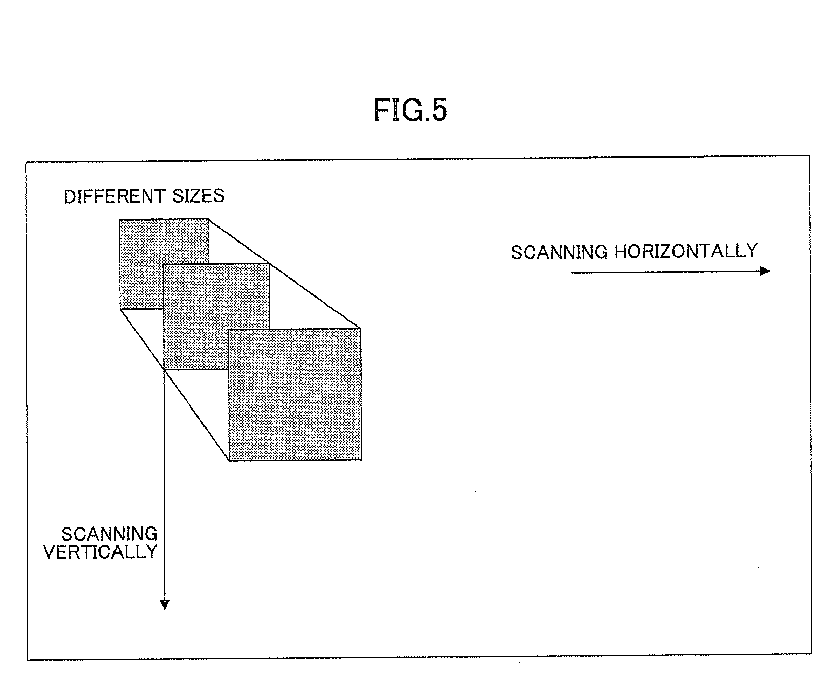

FIG. 5 illustrates how to obtain scan windows from a whole image.

As shown in FIG. 5, it is possible to obtain a series of scan windows by moving windows having different sizes on the whole image according to different step lengths. It should be noted that both a scan window extracted from a whole image and eventually a whole image from which a scan window is not extracted may be handled by the multi-view human face detection system in the same way. In the latter case, the whole image may be considered as a scan window too.

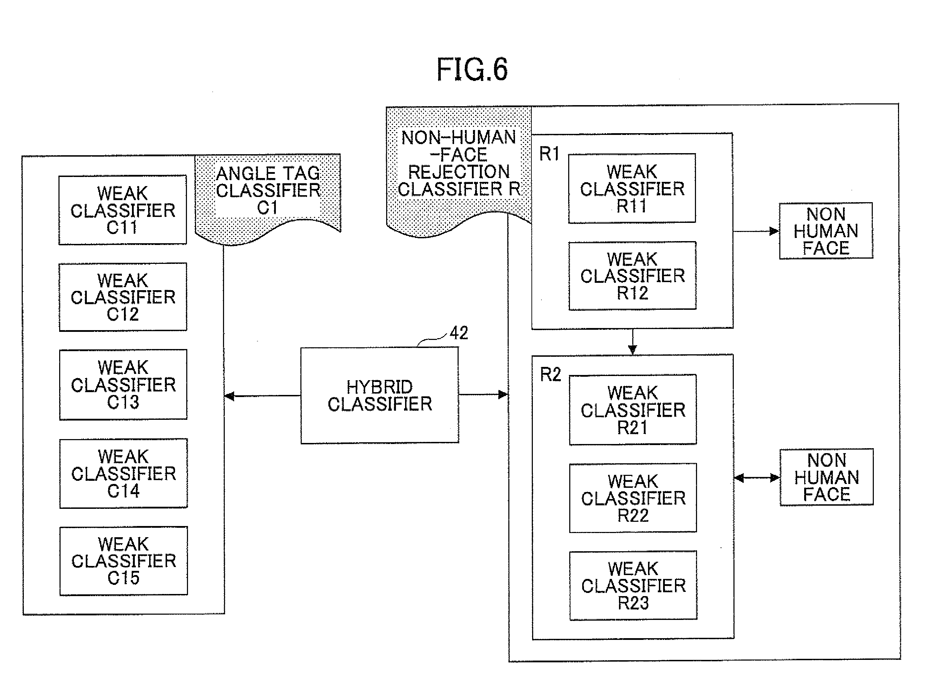

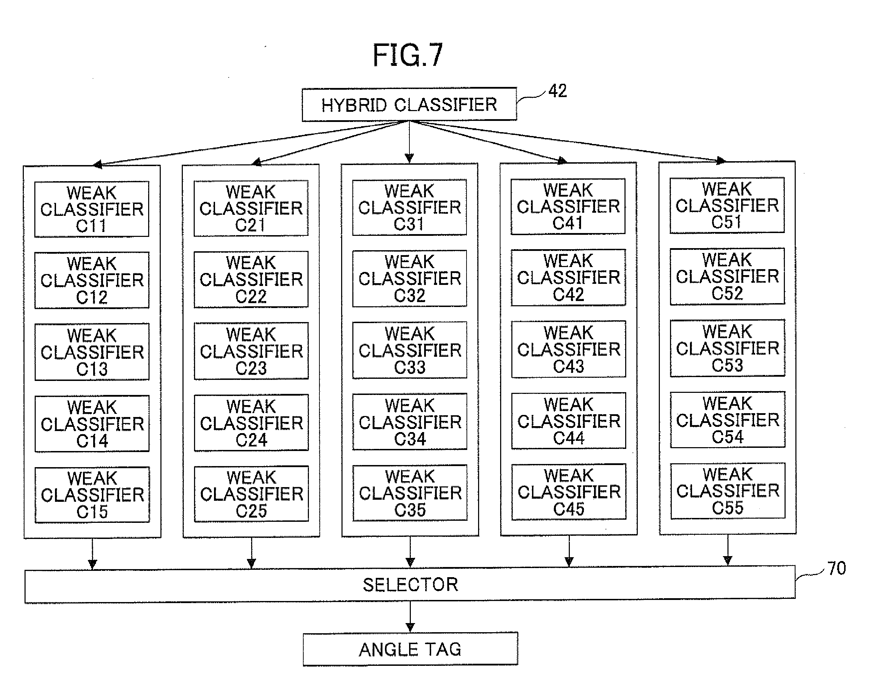

FIG. 6 illustrates a structure of a hybrid classifier. FIG. 7 illustrates concrete structures of angle tag classifiers.

It should be noted that only one angle tag classifier C1 is illustrated on the left side in FIG. 6. In fact, in the hybrid classifier 42 of the embodiment shown in FIG. 6, five angle tag classifiers C1, C2, ⋯ , and C5 are adopted. Furthermore it should also be noted that according to actual needs, plural angle tag classifiers C1, C2, ⋯, and Cn may be adopted in the hybrid classifier 42.

Each of the five angle tag classifiers is formed of plural weak classifiers. For example, as shown in FIG. 6, the angle tag classifier C1 is formed of weak classifiers C11, C12, ⋯, and C1n. The concrete structures of the five angle tag classifiers are illustrated in FIG. 7.

In an experiment, five angles need to be classified; for example, these five angles are as shown in FIG. 3. For this purpose, five AdaBoost angle tag classifiers are set up. These five angle tag classifiers are obtained by carrying out offline learning with regard to positive samples and negative samples. The positive samples are artificially selected human face images corresponding to the respective angles, and the negative samples are various images that do not include human faces. Each of the angle tag classifiers corresponds to a specific angle; this specific angle may cover a certain range. For example, an angle tag classifier of front view human face may correspond to human face images covering an angle range of -5 degrees to +5 degrees. Each of the angle tag classifiers is formed of five weak classifiers. When image data is input, each of the AdaBoost angle tag classifiers is given degree of confidence of the image data belonging to the corresponding angle, and then a selector 70 may output an angle corresponding to the maximum value of the degrees of confidence as a final angle tag.

As shown in the right side of FIG. 6 is a non-human-face rejection classifier R used to carry out rough human face determination in the hybrid classifier 42. In an embodiment of the present invention, this non-human-face rejection classifier R is formed of two non-human-face rejection sub-classifiers R1 and R2. It should be noted that in practice, those people skilled in the art may determine the number of the non-human-face rejection sub-classifiers based on actual needs. Each of the non-human-face rejection sub-classifiers R1 and R2 is formed of plural weak classifiers. For example, as shown in FIG. 6, the non-human-face rejection sub-classifier R1 is formed of two weak classifiers R11 and R12, and the non-human-face rejection sub-classifier R2 is formed of three weak classifiers R21, R22, and R23.

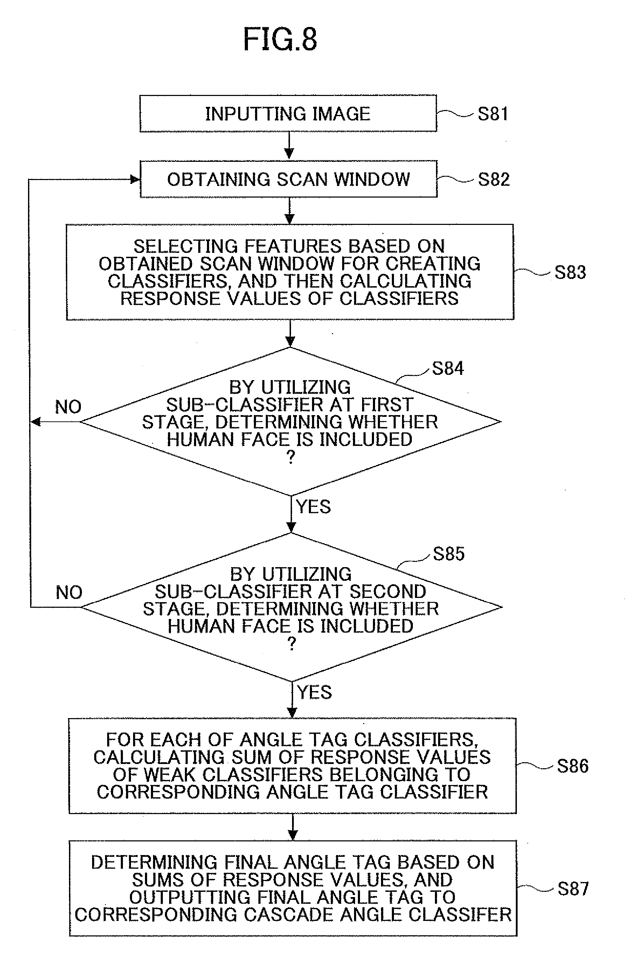

FIG. 8 is a flowchart of processing, carried out by the hybrid classifier 42 shown in FIGS. 6 and 7 with regard to scan widows of an image, of roughly rejecting non human faces and adding an angle tag.

As shown in FIG. 8, in STEP S81, an image is input.

In STEP S82, window scan is carried out with regard to the input image by adopting the multi-scale local binary patterns so as to obtain an image of a multi-scale scan window.

In STEP S83, a multi-class boosting algorithm is utilized to select weak features most having classification ability according to calculation carried out with regard to the obtained scan window, then these weak features are used to create a corresponding AdaBoost weak classifier for each of the specific angles, and then the response values (i.e. degrees of confidence) of these weak classifiers are calculated. These weak classifiers include all the weak classifiers shown in FIGS, 6 and 7.

In STEP S84, it is determined whether the sum of the response values $r_{11}$ and $r_{22}$ responding to the corresponding weak features, of the weak classifiers R11 and R12 in the non-human-face rejection sub-classifier R1 is greater than a threshold value T1. If the sum of $r_{11}$ and $r_{22}$ is greater than T1, then it is determined that this scan window includes a human face, and then the processing goes to STEP S85; otherwise, this scan window is discarded, and the processing goes back to STEP S82 to carry out the window scan with regard to a next window in the input image.

In STEP S85, it is determined whether the sum of the response values $r_{21}$, $r_{22}$, and $r_{23}$ responding to the corresponding weak features, of the weak classifiers R21, R22, and R23 in the non-human-face rejection sub-classifier R2 is greater than a threshold value T2. If the sum of $r_{21}$, $r_{22}$, and $r_{23}$ is greater than T2, then it is determined that this scan window includes a human face, and the processing goes to STEP S86; otherwise, this scan window is discarded, and the processing goes back to STEP S82 to carry out the window scan with regard to a next window in the input image.

By adopting the above selected weak features to create the weak classifiers and using STEPS S84 and S85 to achieve a function of rejecting non-human-face scan windows, it is possible to remove some non-human-face data in these two steps; in this way, it is possible to reduce amount of data needing to be dealt with in the following steps so as to achieve more rapid detection.

STPE S86 may be carried out after STEP S83 or STEP S85. As shown in FIG. 7, for each of the angle tag classifiers C1, C2, ⋯, and C5, the sum of the response values responding to the weak features, of the weak classifiers belonging to the corresponding angle tag classifier is calculated. In particular, when image data is input, each of the AdaBoost angle tag classifiers may calculate the response values of the image data belonging to the respective weak classifiers corresponding to this angle. For example, the response values $c_{11}$, $c_{12}$, ⋯, and $c_{15}$ of the weak classifiers C11, C12, ⋯ , C15 corresponding to the angle tag classifier C1 is calculated. Then the sum Sc of the response values $c_{11}$, $c_{12}$, ⋯, and $c_{15}$ is calculated. The sum Sc is called as the degree of confidence corresponding to this angle.

In STEP S87, the selector 70 selects a maximum value from the degrees of confidence corresponding to the angle tag classifiers C1, C2, ⋯, and Cn, then lets the angle corresponding to the maximum value serve as a final angle tag, and then outputs the final angle tag and the corresponding scan window to the corresponding one of the cascade angle classifiers V1, V2, ⋯, and Vn.

According to the above described embodiments of the present invention, it is possible to integrate two functions of roughly rejecting non human faces and adding an angle tag, into the same classifier (i.e. the hybrid classifier 42) by utilizing the same weak features. As a result, the hybrid classifier 42 in the multi-view human face detection system in the embodiments of the present invention may roughly determine whether the image data is human face data, and then carry out angle classification with regard to the image data. If the determination result is that the image data is human face data, then the hybrid classifier 42 may automatically add an angle tag to the image data based on the angle classification result, and then send the image data with the angle tag to a cascade angle classifier (i.e. a human face detector) corresponding to the angle tag for carrying out accurate determination.

It should be noted that a human face detector may be obtained by carrying out training with regard to human face samples having a specific angle, for example, -45 degrees (ROP), -45 degrees (RIP), 0 degrees (frontal view), +45 degrees (RIP), or +45 degrees (ROP) that may be artificially predetermined as shown in FIG. 3 before carrying out the training. Therefore, after the angle tag corresponding to the image data is obtained, the image data may be directly input into a human face detector corresponding to this angle (i.e. the angle tag). Since human face detectors corresponding to plural angles may be obtained by carrying out training, and a final result of human face detection may be output by these human face detectors, it is possible to achieve the aim of detecting multi-view human faces. Here it should be noted that those people skilled in the art may understand that the follow-on operations of the human face detectors may be carried out by adopting the conventional techniques.

In what follows, major steps adopting the multi-class boosting algorithm, according to an embodiment of the present invention are illustrated. The major steps include the following steps.

STEP 1: if assuming that there are C classes, and each of the classes has N samples, then initializing the distribution of the samples as follows.

$$D_0(x) = 1/(C * N)$$

STEP 2: as for t = 1, 2, ⋯, and T, selecting the most effective weak features, then creating a corresponding weak classifier for each of the classes, and then updating the distribution of the samples.

STEP 3: obtaining final classifiers as follows.

$$H_c(x) = sign[\sum\nolimits_{t=1}^{T} h_{c,t}(x)], \quad c = 1, 2, \cdots, C$$

As for this algorithm, in STEP 1, it is necessary to carry out initialization with regard to data for training; here C refers to the number of the classes, N refers to the number of samples of each of the classes, and $D_0(x)$ refers to the initial weighted value of each of the samples in each of the classes.

In STEP 2, the most effective features are selected by utilizing the multi-class boosting algorithm. In this process, the selection operation is carried out T times, and each time (go-round) a most effective feature corresponding to the current data is selected; here T is the number of the selected features. The details of the process are as follows:

The most effective weak features are found.

As for each of pieces in a piecewise linear function, a class having the largest sum of the weighted values is found. This class is a positive class in the corresponding piece, and its sum of the weighted values is $D_{pos}$; other classes are considered as negative classes.

In order to balance data distribution (one class to (C-1) classes), the sum of the weighted values of the selected positive class samples in the corresponding piece is increased to $(C-1) * D_{pos}$.

The following function is maximized.

$$\sum\nolimits_{bin} \sqrt{sD_{pos} * sD_{neg}}$$

Here $sD_{pos} = \Sigma(C-1) * D_{pos,bin}(x)$, and $sD_{neg} = \Sigma D_{neg,bin}(x)$. $D_{pos,bin}(x)$ refers to the weighted values of the positive samples in the corresponding piece (corresponding to a segment (bin) in a histogram), and $D_{neg,bin}^{(x)}$ refers to the weighted values of the negative samples in the corresponding piece. $sD_{pos}$ refers to the sum of the balanced weighted values of the positive samples in the corresponding piece, and $sD_{neg}$ refer to the sum of the balanced weighted values of the negative samples in the corresponding piece.

The weak classifier of the corresponding class is created; then the weighted values of the training samples belonging to the corresponding class are updated as follows.

$$D_{c,t+1}(x) = D_{c,t}(x)\exp(-1 * h_{c,t}(x))$$

Here c refers to the class to which the training samples belong; t refers to the current go-round of selecting the features by using the multi-class boosting algorithm; and $D_{c,t}(x)$ refers to the weighted values of the data in the current go-round.

In STEP 3, the final angle classifier of the corresponding class is obtained by utilizing the combination of the selected weak classifiers. Here $h_{c,t}$ (x) refers to the t-th weak classfier of the c-th class, and $H_c$ refers to the final angle classifier corresponding to the c-th class, created by using the multi-class boosting algorithm. In a multi-class boosting algorithm, all of classifiers (n classifiers correspond to n angles) may share the same features. For example, if one classifier needs to use 5 features, then five classifiers also only need to use these 5 features. As a result, by utilizing this kind of strategy, it is possible to dramatically save time in detection.

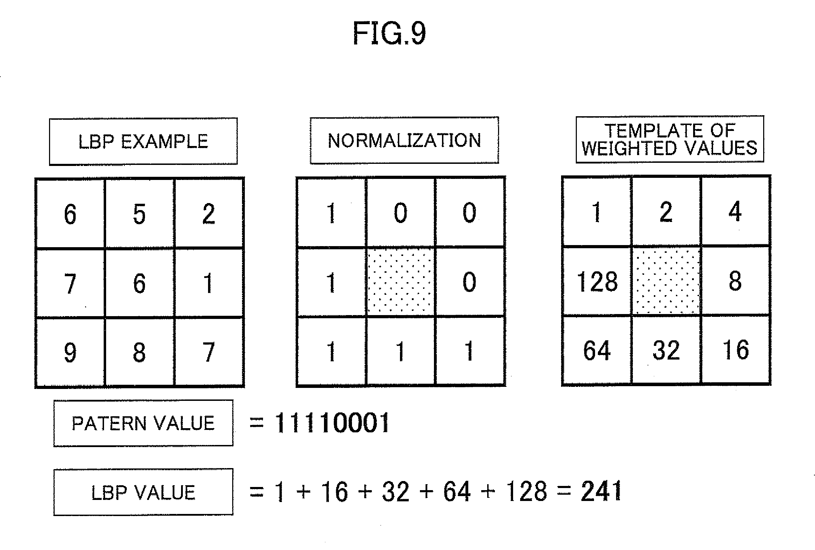

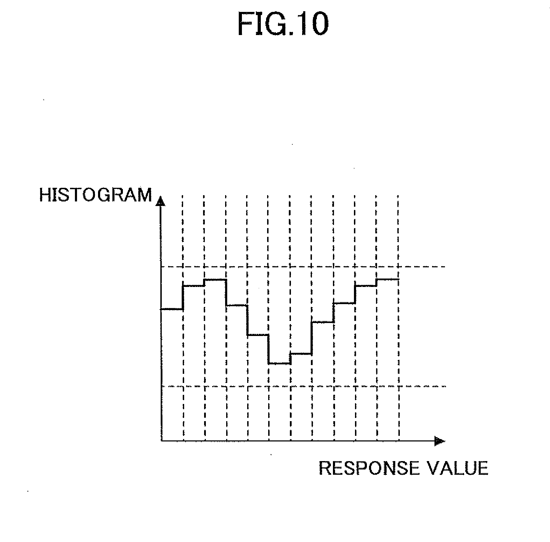

One of the weak features adopted in the above process is shown in FIG. 9, and the corresponding weak classifier is shown in FIG. 10.

FIG. 9 illustrates a weak feature adopted in an angle classifier.

The weak feature adopts MSLBP (multi-scale local binary pattern) texture description. A calculation process of a LBP (local binary pattern) value is as shown in the above STEPS 1 - 3. In FIG. 9, normalization is carried out with regard to input grayscale texture (the LBP example in FIG. 9); that is, a grayscale value of a central area is compared with grayscale values of the surrounding areas (8 areas in FIG. 9) of the central area. If the grayscale value of a surrounding area is greater than or equal to the grayscale value of the central area, then the grayscale value of the surrounding area is normalized as "1" (a pattern value); otherwise, the grayscale value of the surrounding area is normalized as "0" (a pattern value). Then, dot product, of the pattern values after the normalization and a corresponding predetermined template of weighted values, is carried out so as to obtain the final LBP value. The major advantage of the LBP is that it is possible to describe the comparison property of the grayscale value of the central area and the grayscale values of the surrounding areas; by this way, distribution information of local comparison of grayscale texture may be embodied.

FIG. 10 illustrates a weak classifier adopted in an angle classifier.

The weak classifier is a piecewise linear function which is stored as a form of histogram. In FIG. 10, segments of the histogram correspond to patterns of a LBP feature. A value of each of the segments represents degree of confidence (a response value) of the corresponding pattern belonging to human face data.

Experimental results according to the multi-view human face detection system and method according to an embodiment of the present invention is illustrated in the following table. In particular, the follow table illustrates comparison results of performance of classifying angles by adopting different numbers of weak features (i.e. 1 to 5 weak features). In addition, the results illustrated in the following table refer to accuracy of detecting the respective angles according to the respective numbers of the weak features.

| NUMBER OF FEATURES | 0 DEGREES (FRONTAL VIEW) | - 45 DEGRESS (RIP) | + 45 DEGREES (RIP) | - 45 DEGREES (ROP) | + 45 DEGREES (ROP) |
|---|---|---|---|---|---|
| 1 | 78.5 | 85.2 | 82.3 | 81.2 | 75.4 |
| 2 | 86.6 | 91.7 | 91.5 | 84.1 | 85.2 |
| 3 | 90.6 | 92.5 | 92.3 | 88.6 | 88.6 |
| 4 | 93.7 | 92.8 | 93.7 | 90.8 | 91.6 |
| 5 | 95.2 | 94.0 | 94.4 | 93.2 | 92.9 |

Since angle tag classifiers are located at the initial stage of the multi-view human face detection system, all of the input data need to be calculated with regard to these angle tag classifiers. As a result, in order to ensure rapid and real-time detection, only a few (i.e. less than or equal to 5) features are adopted for creating these kinds of classifiers. According to the experimental results illustrated in the above table, in a case where five weak features are adopted for creating an angle classifier, all of the accuracy values obtained by carrying out the detection with regard to the five angles are greater than 92%. This shows that the angle classifier created by adopting the feature and utilizing the multi-class boosting algorithm is effective for angle classification.

In the above described embodiments of the present invention, a human face served as examples for purpose of illustration; however, both in the conventional techniques and in the above described embodiments of the present invention, other objects, for example, the palm of one's hand and a passerby, may be handled too. No matter what object, what feature, and what angle, as long as they are specified before processing a task and training is conducted by adopting samples, corresponding stage classifiers may be obtained to form the cascade angle classifier; then, by carrying out training with regard to various angles, it is possible to obtain plural cascade angle classifiers able to carry out multi-view determination or multi-view detection described in the embodiments of the present invention.

A series of operations described in this specification may be executed by hardware, software, or a combination of hardware and software. When the operations are executed by the software, a computer program may be installed in a dedicated built-in storage device of a computer so that the computer may execute the computer program. Alternatively the computer program may be installed in a common computer by which various types of processes may be executed so that the common computer may execute the computer program.

For example, the computer program may be stored in a recording medium such as a hard disk or a read-only memory (ROM) in advance. Alternatively the computer program may be temporarily or permanently stored (or recorded) in a movable recording medium such as a floppy disk, a CD-ROM, a MO disk, a DVD, a magic disk, a semiconductor storage device, etc. This kind of movable recording medium may serve as packaged software for purpose of distribution.

While the present invention is described with reference to the specific embodiments chosen for purpose of illustration, it should be apparent that the present invention is not limited to these embodiments, but numerous modifications could be made thereto by those people skilled in the art without departing from the basic concept and scope of the present invention.

The present application is based on Chinese Priority Patent Application No. 201010532710.0 filed on Nov. 5, 2010, the entire contents of which are hereby incorporated by reference.

**Claims**

1. A multi-view human face detection system comprising:

   an input device configured to input image data;
   a hybrid classifier including a non-human-face rejection classifier configured to roughly detect non-human-face image data and plural angle tag classifiers configured to add an angle tag into the image data having a human face; and
   plural cascade angle classifiers, wherein,
   each of the plural cascade angle classifiers corresponds to a human face angle, and
   one of the plural cascade angle classifiers receives the image data with the angle tag output from the corresponding angle tag classifier, and further detects whether the received image data with the angle tag includes the human face.

2. The multi-view human face detection system according to claim 1, wherein:

   the input device further includes an image window scan unit configured to carry out data scan with regard to sub-windows having different sizes and different positions, of an original image, and then output image data of the scanned sub-windows into the hybrid classifier.

3. The multi-view human face detection system according to claim 1, wherein:

   the non-human-face rejection classifier includes plural sub-classifiers, and each of the plural sub-classifiers is formed of plural weak classifiers.

4. The multi-view human face detection system according to claim 3, wherein:

   each of the plural angle tag classifiers calculates response values with regard to weak features extracted from the image data and the sum of the response values, and

an angle tag corresponding to an angle tag classifier corresponding to the largest sum is added into the input image data.

5. The multi-view human face detection system according to claim 4, wherein:

the weak features include plural local texture descriptions able to satisfy demands of real-time performance.

6. A multi-view human face detection method comprising:

an input step of inputting image data;
a rough detection step of roughly detecting non-human-face image data, and adding an angle tag into the image data including a human face; and
an accurate detection step of receiving the image data with the angle tag, and further detecting whether the received image data with the angle tag includes the human face.

7. A multi-view human face detection method according to claim 6, further comprising:

a scan step of carrying out data scan with regard to sub-windows having different sizes and different positions, of an original image.

8. A multi-view human face detection method according to claim 7, wherein:

weak features used in the rough detection step, are obtained while carrying out the data scan.

9. A multi-view human face detection method according to claim 8, wherein:

the weak features include plural local texture descriptions able to satisfy demands of real-time performance.

10. A multi-view human face detection method according to claim 6, wherein:

a classifier having stage structure is used to roughly detecting the non-human-face image data.

# FIG.1

# FIG.2

FIG.3

# FIG.4

```
                          ┌─────────────┐  ⌐41
                          │   INPUT     │
                          │   DEVICE    │
                          └──────┬──────┘
                                 │
                                 ▼
                          ┌─────────────┐  ⌐42              ┌──────────┐
                          │   HYBRID    │ ─ ─ ─ ─ ─ ─ ─ ─ ▶ │   NON    │
                          │ CLASSIFIER  │                   │  HUMAN   │
                          └──────┬──────┘                   │   FACE   │
                                 │                          └──────────┘
                                 ▼
          ┌──────────┬───────────┼────────────┬──────────────┐
          ▼          ▼                         ▼
   ┌───────────┐ ┌───────────┐          ┌───────────┐
   │  CASCADE  │ │  CASCADE  │          │  CASCADE  │
   │   ANGLE   │ │   ANGLE   │   ...    │   ANGLE   │
   │CLASSIFIER │ │CLASSIFIER │          │CLASSIFIER │
   │    V1     │ │    V2     │          │    Vn     │
   └─────┬─────┘ └─────┬─────┘          └─────┬─────┘
         │             │                      │        ┌──────────┐
         └ ─ ─ ─ ─ ─ ─ ┼ ─ ─ ─ ─ ─ ─ ─ ─ ─ ─ ┼ ─ ─ ─▶ │   NON    │
         │             │                      │        │  HUMAN   │
         ▼             ▼                      ▼        │   FACE   │
   ┌──────────┐  ┌──────────┐           ┌──────────┐   └──────────┘
   │  HUMAN   │  │  HUMAN   │           │  HUMAN   │
   │   FACE   │  │   FACE   │           │   FACE   │
   └──────────┘  └──────────┘           └──────────┘
```

# FIG.5

DIFFERENT SIZES

SCANNING HORIZONTALLY

SCANNING
VERTICALLY

EP 2 450 831 A2

# FIG.6

EP 2 450 831 A2

# FIG.7

HYBRID CLASSIFIER — 42

| WEAK CLASSIFIER C11 | WEAK CLASSIFIER C21 | WEAK CLASSIFIER C31 | WEAK CLASSIFIER C41 | WEAK CLASSIFIER C51 |
| WEAK CLASSIFIER C12 | WEAK CLASSIFIER C22 | WEAK CLASSIFIER C32 | WEAK CLASSIFIER C42 | WEAK CLASSIFIER C52 |
| WEAK CLASSIFIER C13 | WEAK CLASSIFIER C23 | WEAK CLASSIFIER C33 | WEAK CLASSIFIER C43 | WEAK CLASSIFIER C53 |
| WEAK CLASSIFIER C14 | WEAK CLASSIFIER C24 | WEAK CLASSIFIER C34 | WEAK CLASSIFIER C44 | WEAK CLASSIFIER C54 |
| WEAK CLASSIFIER C15 | WEAK CLASSIFIER C25 | WEAK CLASSIFIER C35 | WEAK CLASSIFIER C45 | WEAK CLASSIFIER C55 |

SELECTOR — 70

ANGLE TAG

EP 2 450 831 A2

# FIG.8

INPUTTING IMAGE ～S81

↓

OBTAINING SCAN WINDOW ～S82

↓

SELECTING FEATURES BASED ON
OBTAINED SCAN WINDOW FOR CREATING
CLASSIFIERS, AND THEN CALCULATING
RESPONSE VALUES OF CLASSIFIERS ～S83

↓

BY UTILIZING
SUB-CLASSIFIER AT FIRST
STAGE, DETERMINING WHETHER
HUMAN FACE IS INCLUDED
? ～S84

NO ←

↓ YES

BY UTILIZING
SUB-CLASSIFIER AT SECOND
STAGE, DETERMINING WHETHER
HUMAN FACE IS INCLUDED
? ～S85

NO ←

↓ YES

FOR EACH OF ANGLE TAG CLASSIFIERS,
CALCULATING SUM OF RESPONSE VALUES
OF WEAK CLASSIFIERS BELONGING TO
CORRESPONDING ANGLE TAG CLASSIFIER ～S86

↓

DETERMINING FINAL ANGLE TAG BASED ON
SUMS OF RESPONSE VALUES, AND
OUTPUTTING FINAL ANGLE TAG TO
CORRESPONDING CASCADE ANGLE CLASSIFER ～S87

# FIG.9

| LBP EXAMPLE | | | NORMALIZATION | | | TEMPLATE OF WEIGHTED VALUES | | |
|---|---|---|---|---|---|---|---|---|
| 6 | 5 | 2 | 1 | 0 | 0 | 1 | 2 | 4 |
| 7 | 6 | 1 | 1 | | 0 | 128 | | 8 |
| 9 | 8 | 7 | 1 | 1 | 1 | 64 | 32 | 16 |

PATERN VALUE $= 11110001$

LBP VALUE $= 1 + 16 + 32 + 64 + 128 = 241$

EP 2 450 831 A2

# FIG.10

HISTOGRAM

RESPONSE VALUE

**EP 2 450 831 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070223812 B2
- US 7324671 B2
- US 7457432 B2
- CN 201010532710